# EUROPEAN PATENT SPECIFICATION

(11) **EP 2 225 928 B1**
(45) Date of publication and mention of the grant of the patent: **25.06.2014**
(21) Application number: 10153802.3
(22) Date of filing: 17.02.2010
(51) Int. Cl.: A01C 7/04

(54) **Seed disk, seed meter and seed machine**
Säscheibe, Staatgutmessgerät und Sämaschine
Disque de graines, doseur de graines et machine d'ensemencement

(30) Priority: 06.03.2009 US 399173
(43) Date of publication of application: 08.09.2010
(73) Proprietor: DEERE & COMPANY, Moline, Illinois 61265-8098 (US)
(72) Inventor: Mariman, Nathan, A., Geneseo, IL 61254 (US)
(74) Representative: Reichert, Christian

(56) References cited:
- EP-A1- 2 018 800
- FR-A1- 2 591 848
- US-A- 5 170 909
- US-A1- 2008 250 993

## Description

The present invention relates to an air pressure seed meter having a seed disc, wherein the seed disc comprises a circular member having a first side, a second side and a peripheral edge, the circular member adapted for rotation about an axis, the peripheral edge is in communication with a source of seeds within the seed meter; and a plurality of passages in said circular member extending from apertures in the peripheral edge of the circular member to openings in the first side of the disk, wherein the peripheral edge is inclined relative to the axis of rotation.

A common form of planter utilizes a vacuum disk seed meter for each row unit of the planter. One example of such is shown in US Patent No. 5,170,909. There, a seed disk is rotated past a pool of seeds on one side thereof. A plurality of seed cells formed by recesses in the surface of the seed disk at one or more circumferential rows of holes adjacent the outer periphery of the seed disk mechanically accelerate and eventually capture therein individual seeds from the seed pool. The individual seeds are held within the cells by a pressure differential created by a vacuum source coupled to the inside of the housing on the opposite side of the seed disk until the cells reach a discharge area. At the discharge area, the effects of the vacuum are cut off so as to release the individual seeds from the cells for discharge through a chute at the bottom of the housing to a seed furrow below. A positive pressure on the seed side of the disk can be used in place of the vacuum on the opposite side.

The US 2008/250993 A1 discloses a vacuum seed metering system having a housing and a seed disk with holes extending from a first face to a second face thereof and being substantially uniformly placed from one another around the circumference of the disk. A vacuum system urges a single seed into a single hole on the disk. A device is provided for releasing the single seeds from the holes on the disk at substantially the same location for sequential distribution of seeds.

While such seed meters function well, improvements can be made that will help to improve the crop yields and improve the planting efficiency. For example, with some crops, precise spacing of the seeds in the seed trench can improve crop yields. How the seed is released from the seed disk impacts the seed trajectory through the seed tube and the seed's ultimate placement in the seed trench. Likewise, the distance the seed drops from the seed meter to the trench will also impact the seed spacing accuracy. The shorter the seed drop, the better the control in the seed placement. Yields can also be increased with different row spacings to plant with a higher seed population. One example is twin row planting with two closely spaced seed rows. The width of current seed meters makes it difficult to place two meters close together for twin row applications. Increased efficiency of planting can be accomplished with higher travel speeds during planting. However, with current seed meters, higher travel speeds decrease the accuracy of seed spacing.

Accordingly one object of the invention is to provide a seeding device with which one or more of said problems can be resolved.

The object of the invention will be achieved by the teachings of claim 1. Further advantageous embodiments are defined within the subclaims.

According to the invention a seed meter of the above mentioned type comprises a plurality of recesses in the peripheral edge.

Furthermore a seed meter assembly comprises a seed disk having a circular member with a first side, a second side and a peripheral edge, and a plurality of passages in the circular member; and a housing in which said seed disk is mounted for rotation about an axis, the housing forming a reservoir for seed through which the peripheral edge of the seed disk rotates, characterized in that the passages extending from apertures in the peripheral edge of the circular member to openings in the first side of the disk arranged in a circular array and the housing forming an arcuate vacuum channel arranged in juxtaposition to the circular array of openings in the first side of the disk.

The seed meter of the present invention may have a seed disk with seed apertures on the peripheral edge of the disk. This avoids having the seed fall across a portion of the seed disk face upon release. The result is a more predictable seed trajectory, improving the accuracy of seed spacing. With seed pick-up on the disk periphery, the seed reservoir in the meter housing can be located to the front or rear of the disk as opposed to the side of the disk, this narrows the meter housing, making it easier to package two meters close together for twin row planting. The narrower meter can also be placed lower in the row unit, reducing the seed drop distance. With improved seed placement accuracy, the planter travel speed can be increased.

Further efficiency is gained by a vacuum clean-out of the seed meters, reducing the time required to change seed type or variety.

A seeding machine may comprise a seed meter assembly having a seed metering member with a plurality of passages therein and a housing in which said metering member is mounted for rotation about an axis, the housing forming a reservoir to hold a supply of seed in contact with the passages in the metering member as the passages move through the reservoir upon rotation of the metering member, the housing having a vacuum port at a lower end of the reservoir adapted to couple the reservoir to a vacuum source to facilitate removal of seed from the reservoir by vacuum.

The housing may include a vacuum chamber arranged in juxtaposition to the passages in the metering member and a vacuum port adapted to couple the vacuum chamber to a vacuum source and further comprising a vacuum pump selectively connectable to either the vacuum chamber or the seed reservoir.

In another embodiment the seed meter assembly may comprise: a seed metering member having apertures for retaining seed thereon; a housing in which said metering member is mounted, the housing forming a reservoir to hold a supply of seed in contact with the apertures in the metering member; and a seed singulator assembly carried by the housing having at least one rotating member engaging the metering member and being in close proximity to the apertures to engage seed adhered to the apertures to remove excess seed therefrom, the at least one wheel being mounted to a carrier that is movably mounted to the housing whereby the wheel follows a surface of the metering member.

In a further embodiment the seed meter assembly may comprise: a seed metering member having a first side and a second side, the metering member including a plurality of passages therein opening to the first side of the metering member in a circular array of openings; and a housing in which said metering member is mounted for rotation about an axis, the housing forming an arcuate vacuum channel arranged in juxtaposition to the circular array of openings in the metering member and adapted to be coupled to a vacuum source, the vacuum channel having radially spaced inner and outer edges and leading and trailing ends in the direction of rotation of the metering member, the leading and trailing ends of the vacuum channel being arranged at an angle to the radial direction.

A seal for an arcuate vacuum chamber of above seed meter housing may comprise first and second arcuate segments radially spaced from one another and connected to one another by first and second end segments, the end segments extending in a direction that is inclined to a radial direction defined by the first and second arcuate segments.
Fig. 1 is a side view of a planter row unit with the meter of the present invention;
Fig. 2 is a perspective view of the seed meter disk showing the peripheral edge of the disk;
Fig. 3 is an enlarged, fragmentary perspective view of the opposite side of the seed disk from what is shown in Fig. 2;
Fig. 4 is a perspective view of the one member of the meter housing illustrating the vacuum channel and seal as well as the doubles eliminator;
Fig. 5 is an enlarged side view of the disk together with the seed singulator illustrating the interaction therebetween;
Fig. 6 is a side view of the seed singulator as viewed from the right in Fig. 5;
Fig. 7 is a perspective view of the seed meter illustrating the other housing member and vacuum clean-out; and
Fig. 8 is a schematic illustration of the vacuum clean out system.

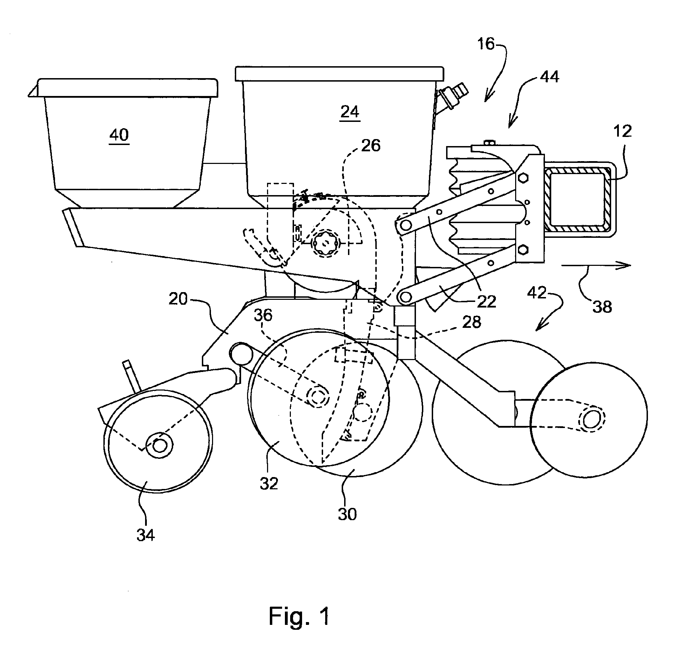

With reference to Fig. 1 a planter row unit 16 is shown mounted to transversely extending tool bar 12 in a conventional manner. The row unit 16 is provided with a central frame member 20 coupled to the tool bar by a parallelogram linkage 22 to enable vertical relative movement between the row unit and the toolbar in a known manner. Seed is stored in seed hopper 24 and provided to a seed meter 26. The seed meter singulates seed from a seed pool and drops the individual seeds through a seed tube 28 into a planting furrow. The furrow is formed in the soil by furrow opener disks 30. Gauge wheels 32 control the depth of the furrow and closing wheels 34 close the furrow over the seed. The gauge wheels 32 are mounted to the frame member 20 by arms 36. The row unit 16 further includes a chemical hopper 40, a row cleaner attachment 42 and a down force generator 44. The toolbar and row unit are designed to be move over the ground in a forward working direction identified by the arrow 38. Multiple row units 16 are transversely spaced along and mounted to the toolbar 12. The row unit 16 is shown as an example of the environment in which the meter of the present invention is used. The seed meter of the present invention can be used in any of a variety of planting units.

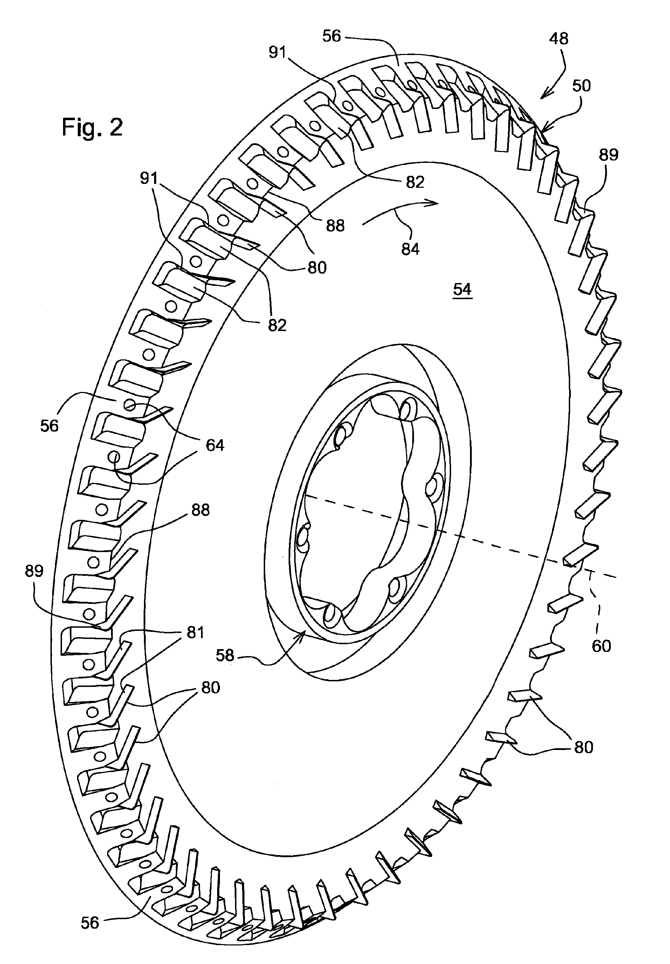

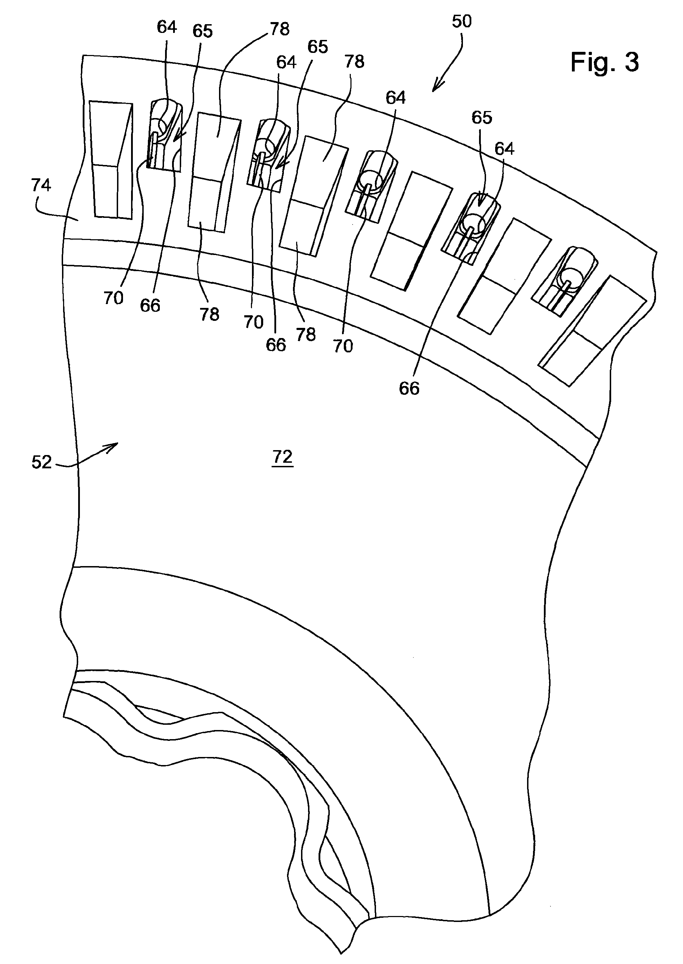

The seed meter 26 includes a seed disk 48 formed of circular member 50 (Fig. 2). The circular member 50 has a first or vacuum side 52 (Fig. 3) and a second or opposite side 54. (The use of the terms "vacuum side" and "opposite side" as applied to the disk is used solely to distinguish the two sides from one another and are not intended to limit the scope of the invention. For example, as described below, a vacuum is used to adhere seed to the circular member. A positive pressure could be used in place of the vacuum.) A peripheral edge 56 at the circumference of the circular member extends axially relative to the vacuum and opposite sides of the circular member. The circular member includes a central hub portion 58 by which the disk 48 is mounted to the meter drive for rotation about an axis 60. A plurality of apertures 64 on the peripheral edge 56 are formed by passages 65 that extend through the circular member 50 to openings 66 on the first, or vacuum, side 52 of the circular member. See Figs. 2 and 3. A rib 70 is disposed in each passages to partially block the associated aperture 64 to prevent smaller seeds from lodging in the apertures.

On the vacuum side 52 of the circular member there is an intermediate portion 72 extending radially from the drive hub to an outer annular portion 74 adjacent the peripheral edge. The outer annular portion 74 is axially raised from the intermediate portion 72 (Fig. 3). The openings 66 are located in the raised outer ring or annular portion 74 forming an circular array of openings on the vacuum side of the circular member. Between each of the openings 66, a recess 78 is formed in the raised outer annular portion. Likewise, between each aperture 64 in the peripheral edge 56, a recess or groove 82 is formed. The circular member 50 rotates in the direction shown by the arrow 84. Features on the second side of the circular member, shown in Fig. 2 a fins 80 extending axially form confronting faces 81 in the direction of rotation. The confronting faces engage and agitate seed in the seed reservoir. In the embodiment show, the fins continue around the corner 88 at the connection of the peripheral edge and the second side forming a feature 89 radially extending from the peripheral edge. The features 89 follow the apertures 64 in the direction of rotation 84 at the forward edge 91 of each recess 82. As an alternative, the features forming the confronting faces 81 could be recesses in the second side of the circular member 50.

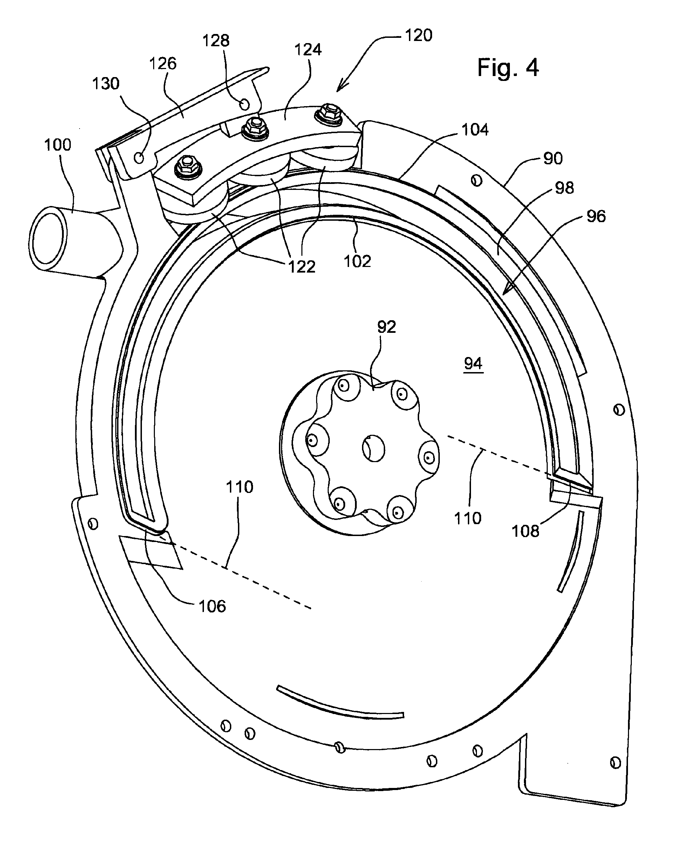

The seed meter housing consists of the first and second members 90, 150, the first member 90 is shown in Fig. 4. The first housing member carries a drive hub 92 that mates with the central hub 58 of the circular member 50. Drive hub 92 is coupled to a drive mechanism (not shown). The circular member 50 is mounted to the first housing member 90 with the vacuum side 52 facing the inner surface 94 of the first housing member. The first housing member 90 is formed with an arcuate vacuum channel 96 which is open to the circular array of openings 66 in the circular member 50. A resilient seal 98 around the perimeter of the vacuum channel 96 engages the axially raised outer annular portion 74 of the circular member 50 to prevent or reduce air flow therebetween. The vacuum channel has radially spaced inner and outer sides 102 and 104. A leading end 106 and a trailing end 108, relative to the direction of rotation, join the inner and outer sides of the vacuum channel. The leading and trailing ends of the vacuum channel are inclined or angled relative to the radial direction as shown by the broken lines 110. The angled ends of the vacuum channel allow for a transition of the vacuum pockets over the seal at the ends of the vacuum channel. This eliminates harmonic vibration of the seal 98 that occurs with radially oriented channel ends, parallel to the radial sides of the openings 66. The seal 98 is formed to fit the vacuum channel and has first and second arcuate segments along the radially spaced inner and outer sides 102 and 104 of the vacuum channel and first and second end segments therebetween that are inclined to the radial direction defined by the arcuate segments. The vacuum channel 96 he is coupled to a vacuum port 100 which in turn is connected to a vacuum pump to provide a vacuum or lower pressure in the vacuum channel 96, creating a pressure differential across the apertures 64 in the seed disk.

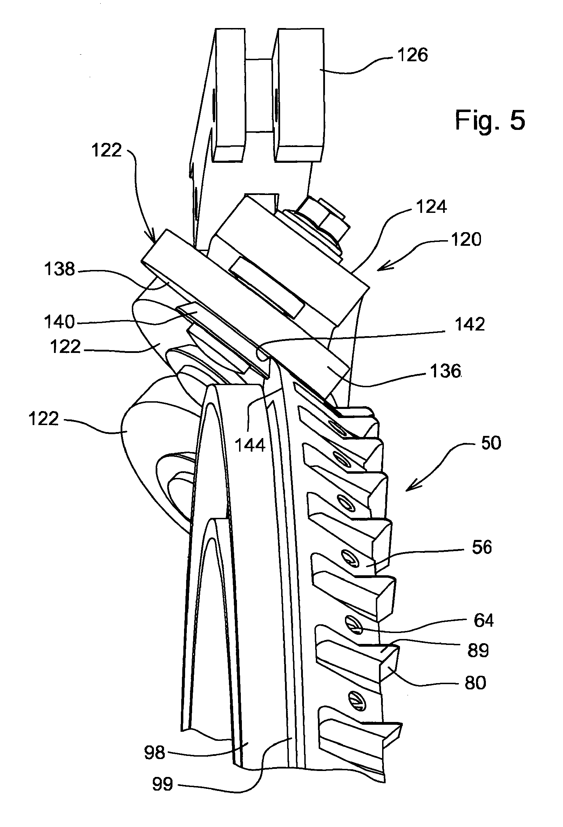

With reference to Figs. 4, 5 and 6, a seed singulator 120 is shown and described. The seed singulator includes three rotating members such as rollers or wheels 122 rotatably mounted to a carrier 124. The carrier 124 is movably mounted to a support arm 126 at the pivot 128. This allows the carrier to adjust itself such that all three of the rollers 122 remain in contact with the circular member 50. The support arm 126 is in turn movably mounted to the housing member 90 at the pivot 130. This allows the rollers 122 to adjust for runout of the circular member 50. That is, to adjust for the circular member not being perfectly round and/or the axis of rotation 60 not being perfectly in the center of the circular member 50. As shown in Fig. 5, the peripheral edge 56 of the circular member 50 is not cylindrical about the axis 60 but is inclined radially inward from the first, or vacuum, side 52 toward the second, or opposite, side 54. The inclined edge 56 is preferred but the benefits of the invention can be obtained with a cylindrical peripheral edge as well. The rollers 122 have a main portion 136 that is generally cylindrical in shape. The bottom side 138 of the rollers engage the peripheral edge 56 of the disk member. The roller partial covers the apertures 64 to push the seeds slightly off the apertures so that if two or more seeds are adhered to any one aperture, the extra seeds are removed. A conically shaped projection 140 extends from the bottom side 138 of the rollers 122 and forms a groove 142 into which the corner 144 of the circular member is seated. By positioning the disk corner in the groove, the disk and rollers maintain engagement regardless of the tolerances of the disk and meter housing and regardless of dynamic conditions of the planter row unit. Also, in Fig. 5, a lip 99 of the seal 98 is shown engaging the vacuum side of the circular member 50.

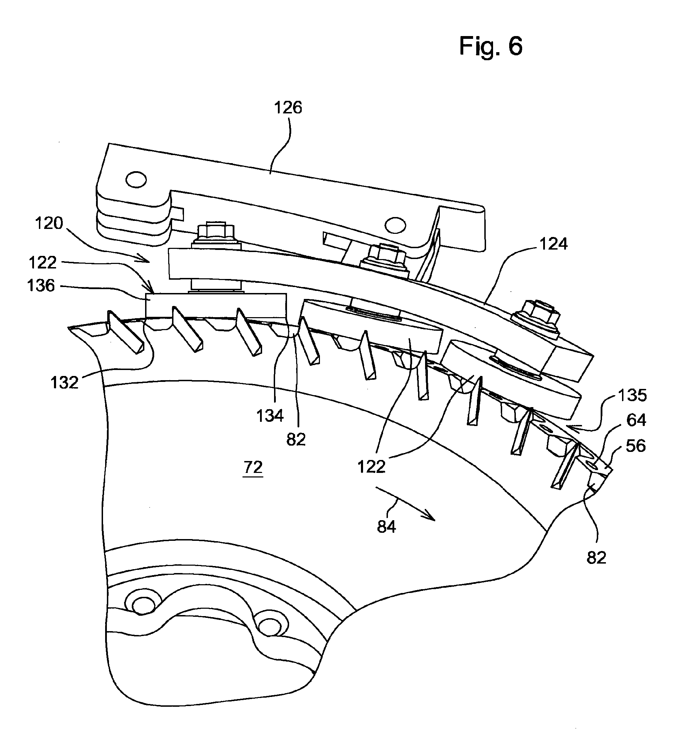

With reference to Fig. 6, the engagement between the rollers 122 and the circular member 50 is shown in greater detail. The rollers are mounted at slight incline to the circular member 50 such that the leading edge 132 of the roller, that is the first edge of the roller to contact the circular member relative to the direction of rotation, is closer to the circular member than the trailing edge 134 of the rollers. This results in a noticeable gap 135 between the roller trailing edge and the disk 48 that is not present at the leading edge. This orientation of the roller relative to the disk reduces the likelihood of seed fragments becoming lodged between the roller and circular member by providing an increasing gap between the two in the direction of rotation.

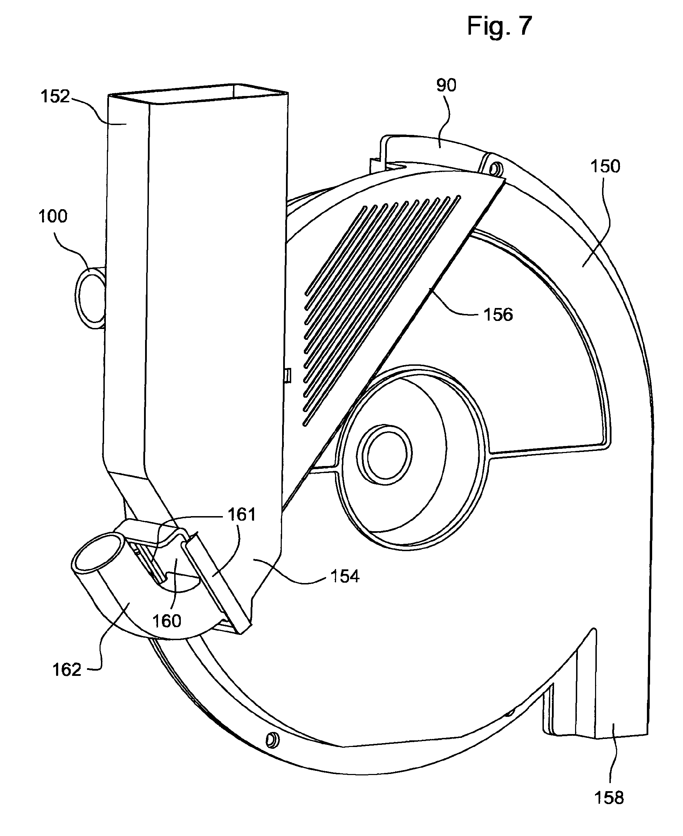

The assembled seed meter housing is shown in Fig. 7 with the housing second member, or cover, 150. The cover 150 includes a seed supply chute 152 through which seed is supplied to the meter. The lower end 154 of the seed supply chute forms a seed reservoir along the peripheral edge and partially on the side 54 of the circular member. A brush or other seal member (not show) is carried by the cover along the line 156 and engages the second side of the circular member to return seeds removed by the seed singulator back to the seed reservoir. After the seed is released from the meter disk, the seed drops through the discharge chute 158 into the seed tube 28 and to the furrow in the soil below.

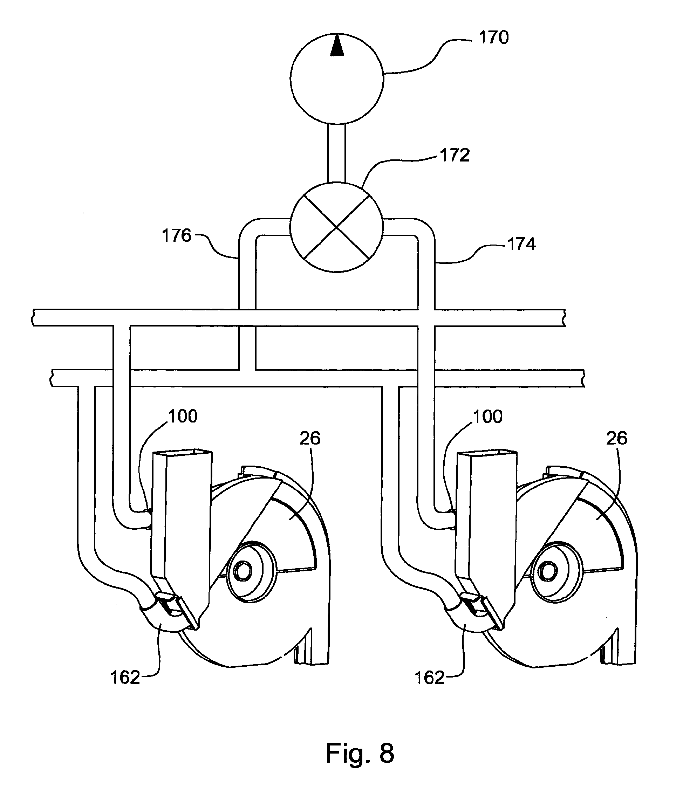

A removable door 160 is located at the bottom of the seed reservoir to assist in cleaning unused seed from the reservoir when the operator wishes to change seed type or variety. The door edges fit into slots 161 formed in the housing cover. By removing the door 160, remaining seed will fall from the reservoir. The door 160 is shown with an optional vacuum port 162 that can be connected to a vacuum source to remove the excess seed without the need to manually remove the door 160 from each seed meter of each row unit. The schematic drawing of Fig. 8 illustrates the vacuum system. The vacuum pump 170 is connected to a valve 172 that is selectively switched between normal planting operation and clean-out. During normal planting operation, the valve directs the vacuum to line 174 which in turn is in communication with the vacuum ports 100 of each seed meter. This supplies vacuum, or reduced air pressure, to the vacuum channels of each meter and thereby to the apertures 64 in the circular members to allow the pick-up of seeds from the seed reservoir. For clean-out, the valve 172 is switched, connecting the vacuum to line 176 which is in communication with vacuum ports 162 in the doors 160. The vacuum thus removes the seed from the reservoirs. If the vacuum pump 170 does not have sufficient capacity to clean all meters simultaneously, the line 174 can be coupled to a manifold with multiple valves to sequentially clean out groups of meters at a time.

As with other pressure differential seed meters, while the present invention has been shown and described as using a vacuum, it is possible to use a positive air pressure to retain the seeds on the circular member 50 and the claims which follow should be interpreted to include a positive pressure system wherein the pressure in the seed reservoir is higher than the pressure in the vacuum channel unless specifically precluded by the claim language.

Having described the preferred embodiment, it will become apparent that various modifications can be made without departing from the scope of the invention as defined in the accompanying claims.

## Claims

1. Air pressure seed meter (26) having a seed disc (48), wherein the seed disc (48) comprises a circular member (50) having a first side (52), a second side (54) and a peripheral edge (56), the circular member (50) adapted for rotation about an axis (60), the peripheral edge (56) is in communication with a source of seeds within the seed meter (26); and a plurality of passages (65) in said circular member (50) extending from apertures (64) in the peripheral edge (56) of the circular member (50) to openings (66) in the first side (52) of the disk (48), wherein the peripheral edge (56) is inclined relative to the axis of rotation (60) **characterized in** further comprising a plurality of recesses (82) in the peripheral edge (56).

2. The air pressure seed meter (26) of claim 1 wherein the peripheral edge (56) is inclined radially inwardly relative to the axis of rotation (60) in a direction from the first side (52) to the second side (54).

3. The air pressure seed meter (26) of claim 1 or 2 further comprising features (89) extending radially from the peripheral edge (56) adjacent said second side (54) of the circular member (50) and located rearward of each aperture (64) relative to a direction of rotation and further comprising features (80) on the second side (54) forming confronting faces (81) in the direction of rotation, wherein the feature (80) on the second side (54) is a raised feature from the second side (54).

4. The air pressure seed meter (26) of one of the claims 1 to 3 comprising a raised rib (70) in each of the passages (65) blocking a portion of the associated aperture (64).

5. The air pressure seed meter (26) of one of the claims 1 to 4 wherein the circular member (50) is a solid disk having a central hub portion (58), an intermediate portion (72) and an outer annular portion (74) adjacent the peripheral edge (56) that is axially raised from the intermediate portion (72) on the first side (52), and wherein the passages (65) open to the first side (52) of the disk (48) in the outer annular portion (74).

6. A seeding machine comprising an air pressure seed meter (26) according to one of the claims 1 to 5.

## Patentansprüche

1. Luftdruck-Saatgutmessgerät (26) mit einer Säscheibe (48), wobei die Säscheibe (48) ein kreisförmiges Element (50) umfasst, das eine erste Seite (52), eine zweite Seite (54) und einen Umfangsrand (56) aufweist, wobei das kreisförmige Element (50) zum Drehen um eine Achse (60) ausgelegt ist, wobei der Umfangsrand (56) in Kommunikation mit einer Saatgutquelle innerhalb des Saatgutmessgeräts (26) steht;
und mehrere Kanäle (65) in dem kreisförmigen Element (50), die sich von Öffnungen (64) in dem Umfangsrand (56) des kreisförmigen Elements (50) zu den Öffnungen (66) an der ersten Seite (52) der Scheibe (48) erstrecken, wobei der Umfangsrand (56) in Bezug auf die Drehachse (60) geneigt ist, **gekennzeichnet dadurch, dass** diese ferner mehrere Aussparungen (82) in dem Umfangsrand (56) aufweist.

2. Luftdruck-Saatgutmessgerät (26) nach Anspruch 1, wobei der Umfangsrand (56) radial nach innen in Bezug auf die Drehachse (60) in eine Richtung von der ersten Seite (52) zu der zweiten Seite (54) geneigt ist.

3. Luftdruck-Saatgutmessgerät (26) nach Anspruch 1 oder 2, ferner umfassend Merkmale (89), die sich radial von dem Umfangsrand (56) benachbart zu der zweiten Seite (54) des kreisförmigen Elements (50) erstrecken und nach hinten bezüglich jeder Öffnung (64) in Bezug auf eine Drehrichtung angeordnet sind, und ferner Merkmale (80) an der zweiten Seite (54) umfasst, die sich gegenüberliegende Flächen (81) in Drehrichtung bilden, wobei das Merkmal (80) an der zweiten Seite (54) ein erhobenes Merkmal der zweiten Seite (54) ist.

4. Luftdruck-Saatmessgerät (26) nach einem der Ansprüche 1 bis 3, umfassend eine erhobene Rippe (70) in jedem der Kanäle (65), welche einen Abschnitt der zugehörigen Öffnung (64) blockieren.

5. Luftdruck-Saatmessgerät (26) nach einem der Ansprüche 1 bis 4, wobei das kreisförmige Element (50) eine feste Scheibe mit einem zentralen Nabenabschnitt (58), einem Zwischenabschnitt (72) und einem äußeren ringförmigen Abschnitt (74) benachbart zu dem Umfangsrand (56) ist, die axial von dem Zwischenabschnitt (72) an der ersten Seite (52) erhoben ist, und wobei sich die Kanäle (65) zur ersten Seite (52) der Scheibe (48) in dem äußeren ringförmigen Abschnitt (74) öffnen.

6. Sämaschine, umfassend ein Luftdruck-Saatgutmessgerät (26) nach einem der Ansprüche 1 bis 5.

## Revendications

1. Doseur de graines à pression d'air (26) ayant un disque de graines (48), le disque de graines (48) comprenant un organe circulaire (50) ayant un premier côté (52), un deuxième côté (54) et un bord périphérique (56), l'organe circulaire (50) étant prévu pour tourner autour d'un axe (60), le bord périphérique (56) communiquant avec une source de graines à l'intérieur du doseur de graines (26) ; et une pluralité de passages (65) dans ledit organe circulaire (50) s'étendant à partir d'ouvertures (64) dans le bord périphérique (56) de l'organe circulaire (50) jusqu'à des ouvertures (66) dans le premier côté (52) du disque (48), le bord périphérique (56) étant incliné par rapport à l'axe de rotation (60), **caractérisé en ce qu'**il comprend en outre une pluralité de retraits (82) dans le bord périphérique (56).

2. Doseur de graines à pression d'air (26) selon la revendication 1, dans lequel le bord périphérique (56) est incliné radialement vers l'intérieur par rapport à l'axe de rotation (60) dans une direction allant du premier côté (52) au deuxième côté (54).

3. Doseur de graines à pression d'air (26) selon la revendication 1 ou 2, comprenant en outre des éléments (89) s'étendant radialement depuis le bord périphérique (56), adjacents audit deuxième côté (54) de l'organe circulaire (50) et situés vers l'arrière de chaque ouverture (64) par rapport à un sens de rotation et comprenant en outre des éléments (80) sur le deuxième côté (54) formant des faces en regard (81) dans le sens de rotation, l'élément (80) sur le deuxième côté (54) étant un élément rehaussé depuis le deuxième côté (54) .

4. Doseur de graines à pression d'air (26) selon l'une quelconque des revendications 1 à 3, comprenant une nervure rehaussée (70) dans chacun des passages (65), bloquant une partie de l'ouverture associée (64).

5. Doseur de graines à pression d'air (26) selon l'une quelconque des revendications 1 à 4, dans lequel l'organe circulaire (50) est un disque solide ayant une partie de moyeu central (58), une partie intermédiaire (72) et une partie annulaire externe (74) adjacente au bord périphérique (56), qui est rehaussée axialement depuis la partie intermédiaire (72) sur le premier côté (52), les passages (65) s'ouvrant vers le premier côté (52) du disque (48) dans la partie annulaire externe (74).

6. Machine d'ensemencement comprenant un doseur de graines à pression d'air (26) selon l'une quelconque des revendications 1 à 5.
